# EUROPEAN PATENT APPLICATION

(11) **EP 1 003 296 A2**
(43) Date of publication of application: **24.05.2000**
(21) Application number: 99122874.3
(22) Date of filing: 17.11.1999
(51) Int. Cl.: H04B 7/005

(54) **Base station power control method and system capable of smoothly executing handoff**

(30) Priority: 18.11.1998 JP 32738398
(71) Applicant: NEC CORPORATION, Tokyo (JP)
(72) Inventor: Kondo, Seiji, c/o NEC Saitama, Ltd., Kodama-gun, Saitama (JP)
(74) Representative: Glawe, Delfs, Moll & Partner

(57) **Abstract**

In a mobile communication system which carries out communication between a base station and a mobile terminal by transmitting a control signal therebetween, the control signal is augmented in its amplitude with an increase of a retransmission number of the control signal. The control signal is delivered from a base station to each base station with a retransmission number included therein. Each base station detects the retransmission number of the control signal by a retransmission number detector and augments an amplitude of the control signal with an increase of the retransmission number by an amplitude control portion. With this structure, it is possible to avoid nonreception of the control signal at each mobile terminal even when the control signal from the base station suffers interference from another reception energy from a different base station.

## Description

### Background of the Invention:

This invention relates to a base station radio communication device (will be often be abbreviated to a base station hereinafter) and a method of controlling the base station radio communication device. In particular, this invention relates to the base station radio communication device which receives a control signal sent from a base station controller to deliver a transmission signal to a mobile terminal.

As a mobile communication system of a cellular type, a wide variety of multiple access systems have been heretofore proposed and adopted in the world. Among others, a recent attention has been directed to a code division multiple access (CDMA) system which has a specific spread code assigned to and peculiar to each channel. In such a CDMA system, a modulated wave of an identical carrier frequency is spread by each specific spread code to be transmitted from a transmitter side in the form of a spread signal while synchronization operation is executed by the use of each specific spread code in each receiver side to identify a desired channel.

More specifically, such a CDMA system of a cellular type has a radio base station (which will be called a base station radio communication device) and a plurality of mobile terminal communicable with the base station radio communication device within a radio service area of the base station. Thus, the base station radio communication device has the radio service area. In addition, a base station controller is located one at a plurality of the service radio areas and is connected to the plurality of the base station radio communication devices.

As mentioned before, different spread codes are used to identify radio channels between the base station radio communication device and the mobile terminals while communication is also executed between the base station controller and the base station radio communication devices.

Herein, it is to be noted in the CDMA system of the cellular type that each mobile terminal is moved through the radio service areas from one to another. In this event, the base station radio communication devices must be switched from one to another without interrupting communication with each mobile terminal.

In other words, communication must not be interrupted between each mobile terminal and the base station radio communication devices, even when each mobile terminal is moved through the radio service areas from one to another. To this end, a handoff operation is executed to switch the base station radio communication devices from one to another under control of the base station controller.

Specifically, the base station radio communication devices are switched from one to another in the CDMA system through a soft handoff operation during which each mobile terminal simultaneously communicates with a plurality of the base station radio communication devices.

However, it often happens that the soft handoff operation is not normally executed due to shadowing and, as a result, a call drop takes place due to the shadowing by failure of the soft handoff operation.

In Japanese Patent No. 2762965 (will be called Reference 1) assigned to the same assignee as this patent application, such a soft handoff method has been proposed which monitors, in a mobile terminal, pilot channels of base station radio communication devices which include a communicating device under communication and a destined device to be switched. The mobile terminal informs the base station radio communication devices of reception power in the pilot channels sent from the base station radio communication devices. The communicating device and the destined device control transmission power on the basis of the informed reception power under control of a base station controller.

However, it is difficult with this method to cope with an abrupt change of the reception power which might occur due to an obstacle.

On the other hand, Japanese Unexamined Patent Publication No. Hei 8-8817, namely, 8817/1996 (will be referred to as Reference 2) discloses a transmitter which controls radio transmission power by detecting a radio transmission atmosphere from the retransmission number on failure of transmission. No consideration is made at all in Reference 2 about the soft handoff operation.

### Summary of the Invention:

It is an object of this invention to provide a base station radio communication device which is capable of quickly coping with an abrupt change of reception power or energy and avoiding a call drop which might result from failure of a soft handoff.

It is another object of this invention to provide a base station radio communication device of the type described, which is effectively operable when a mobile terminal is abruptly put into a state which can not receive any signal from a present base station radio communication device owing to reception of a signal of large electric power from another base station radio communication device which does not presently carry out any communication.

It is still another object of this invention to provide a method of controlling a soft handoff operation which is effectively operable even when the base station radio communication devices are abruptly switched from one to another.

A base station radio communication device to which this invention is applicable is for use in combination with a base station controller to receive a control signal from the base station controller and to transmit the control signal as a transmission signal to a mobile terminal. According to a first aspect of this invention, the device comprises receiving means for receiving the control signal and transmit power control means for controlling an amplitude of the transmission signal in accordance with a retransmission number that is representative of the number of retransmission times of the control signal.

According to a second aspect of this invention, a radio communication system comprises a plurality of base station radio communication devices and a base station controller which controls the base station radio communication devices. The base station controller comprises control signal supplying means for supplying a control signal to each of the base station radio communication devices. Each of the base station radio communication devices is communicable with a mobile terminal within each radio service area determined for each base station radio communication device and comprises receiving means for receiving the control signal and transmit power control means for controlling an amplitude of the transmission signal in accordance with a retransmission number which is representative of the retransmission number of times of the control signal. In this event, the transmit power control means comprises a retransmission number detector for detecting the retransmission number of the control signal received through the receiving means to produce an amplitude control signal indicative of the amplitude of the control signal and an amplitude control potion for controlling the amplitude of the control signal that is varied in accordance with the amplitude control signal.

According to a third aspect of this invention, a method is for use in executing handoff in a radio communication system which comprises a mobile terminal and a plurality of base station radio communication devices. The method comprises the steps of transmitting, from either one of the base station radio communication stations and the mobile terminal to another one, a control signal determined for the handoff, augmenting the same control signal to produce an augmented control signal when no acknowledgement of the control signal is received, and retransmitting the augmented control signal again from one to another.

### Brief Description of the Drawing:

Figs. 1A and 1B show schematic diagrams for use in describing a movement of a mobile terminal in a conventional cellular CDMA system;
Fig. 2 shows a graphical representation for use in describing a variation of reception energy in a mobile terminal illustrated in Figs. 1A and 1B;
Fig. 3 shows a time chart for use in describing operation of the conventional CDMA system illustrated in Figs. 1A and 1B;
Fig. 4 shows a block diagram for use in diagrammatically describing a cellular CDMA system according to an embodiment of this invention;
Fig. 5 shows a signal format which is transmitted between a base station controller and each of base station radio communication devices;
Fig. 6 shows a block diagram of each base station communication device illustrated in Fig. 4;
Figs. 7A, 7B, and 7C shows schematic diagrams for use in describing a movement of a mobile terminal and communication between the mobile terminal and each base station;
Fig. 8 shows a graphical representation for use in describing a variation of reception energy in the mobile terminal during the movement illustrated in Figs. 7A to 7C;
Fig. 9 shows a flow chart for use in describing a soft handoff sequence or procedure carried out in each base station illustrated in Fig. 6;
Fig. 10 shows a flow chart for use in describing retransmission of the same control signal sent to the base station during the soft handoff procedure; and
Fig. 11 shows a block diagram of an amplitude control portion illustrated in Fig. 6.

### Description of the Preferred Embodiments:

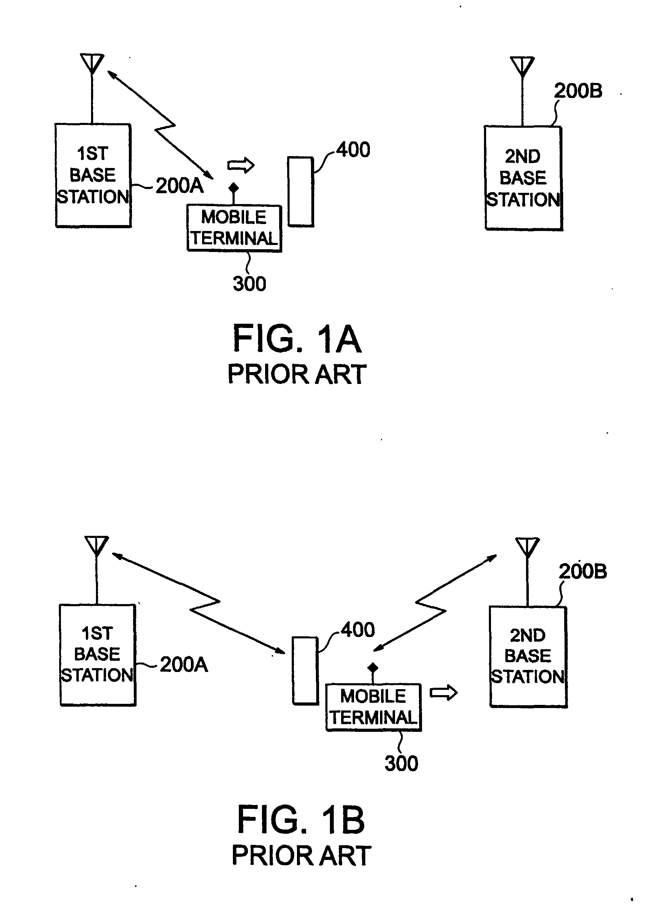

Referring to Figs. 1A and 1B, description will be made about a conventional CDMA system of a cellular type which has two base station radio communication devices which are depicted by 200A and 200B and a mobile terminal 300 and which will be simply referred as first and second base stations hereinafter. As shown in Fig. 1A, the mobile terminal 300 is assumed to move towards the second base station 200B and to be gradually remote from the first base station 200A, communicating with the first base station 200A and that an obstacle 400, such as a big building, exists along a route. In addition, it is assumed that the mobile terminal 300 can measure reception energy of a transmission signal sent from each of the first and the second base stations 200A and 200B, by monitoring pilot channels assigned to each base station 200A and 200B.

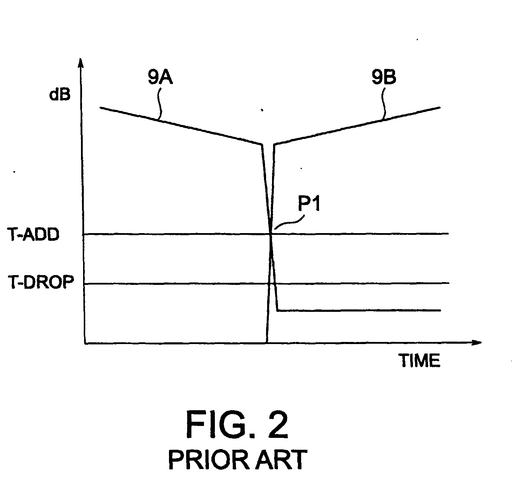

Under the circumstances, the reception energy of the pilot channel assigned to the first base station 200A is gradually reduced with time as the mobile terminal 300 is distant from the first base station 200A towards the obstacle 400, as shown by a curve 9A in Fig. 2. On the other hand, the reception energy of the pilot channel assigned to the second base station 200B is very low between the first base station 200A and the obstacle 400 on account of shadowing resulting from the obstacle 400, as depicted by a curve 9B in Fig. 2.

In this event, the mobile terminal 300 is communicable only with the first base station 200A. In other words, communication of the mobile terminal 300 is repeated only by the first base station 200A.

Herein, it is to be noted in Fig. 2 that first threshold T-ADD and a second threshold T-DROP are predetermined in connection with the reception energy of each pilot channel. Specifically, when the reception energy exceeds the first threshold T-ADD, the base station in question is added to communicable base stations while the base station is removed or dropped from communicable base stations when its reception energy is less than the second threshold T-DROP.

When the mobile terminal 300 progresses towards the second base station 200B and exceeds the obstacle 400, as shown in Fig. 1B, the reception energy of the pilot channel assigned to the second base station 200B is abruptly changed, as depicted by the curve 9B in Fig. 2, and exceeds the first threshold T-ADD at a time point P1 in Fig. 2.

Concurrently, the reception energy of the pilot channel from the first base station 200A is suddenly decreased or attenuated and less than the second threshold T-DROP due to the shadowing resulting from the obstacle 400.

In this event, the reception energy from the second base station 200B brings about interference in a radio signal sent from the first base station and, as a result, make it difficult to communication between the first base station 200A and the mobile terminal 300. This finally results in failure of the handoff procedure from the first base station 200A to the second base station 200B because no transmission from the first base station 200A can be carried out in connection with a message necessary for the handoff.

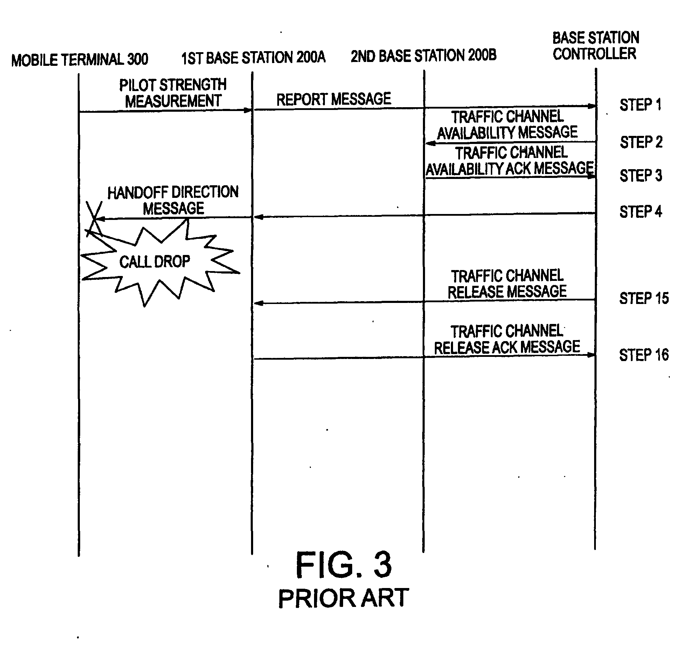

Referring to Fig. 3 together with Figs. 1 and 2, description will be made about the failure of the handoff procedure in detail. It is assumed that the reception energy of the pilot channel assigned to the second base station 200B abruptly exceeds the first threshold T-ADD while the reception energy of the pilot channel assigned to the first base station 200A becomes suddenly lower than the second threshold T-DROP, as shown in Fig. 2. In this event, the mobile terminal 300 transmits a pilot strength measurement report (PSMR) message to the first base station 200A at a step 1. The PSMR message is representative of a result of measuring each reception energy at the mobile terminal and indicates base station or stations which have reception energy higher than the first threshold T-ADD.

The PSMR message is sent through the first base station 200A to the base station controller and is given to the base station controller.

Responsive to the PSMR message, the base station controller adds the reported base station or stations as new soft handoff candidate stations. In the illustrated example, the second base station 200B is added as the new soft handoff candidate station. The base station controller transmits, to the second base station 200B, a traffic channel availability (TCA) message for putting a traffic channel into an active or available state (step S2). Supplied with the TCA message, the second base station 200B which is added as a soft handoff candidate transmits a traffic channel availability acknowledgement (TCA ACK) message to the base station controller at a step 3.

Responsive to the TCA ACK message, the base station controller transmits a handoff direction (HD) message to the mobile terminal 300 through the first base station 200A at a step 4. The HD message is indicative of parameters, such as a spread code, which need to communicate with the second base station 200B.

As readily understood from the above, the HD message must be transmitted to the mobile terminal 300 through the first base station 200A before communication is started between the mobile station 300 and the second base station 200B, in order to smoothly execute the soft handoff.

When the HD message is received by the mobile terminal 300, the soft handoff procedure is successful.

However, it is to be noted that the reception energy of the signal sent from the second base station 200B is abruptly increased when the mobile terminal 300 passes the obstacle 400, as shown in Fig. 1B. In this case, the interference takes place in the radio signal sent from the first base station 200A and, as a result, the mobile terminal 300 can not receive the HD message sent from the first base station 200A. When the HD message is not received by the mobile terminal 300, the base station controller sends the first base station 200A a traffic channel release message, as shown at a step 5, while the first base station 200A sends a traffic channel release acknowledgement message to the base station controller.

From this fact, it is readily understood that no reception of the HD message from the first base station 200A brings about failure of the soft handoff procedure and results in a call drop, as illustrated in Fig. 3.

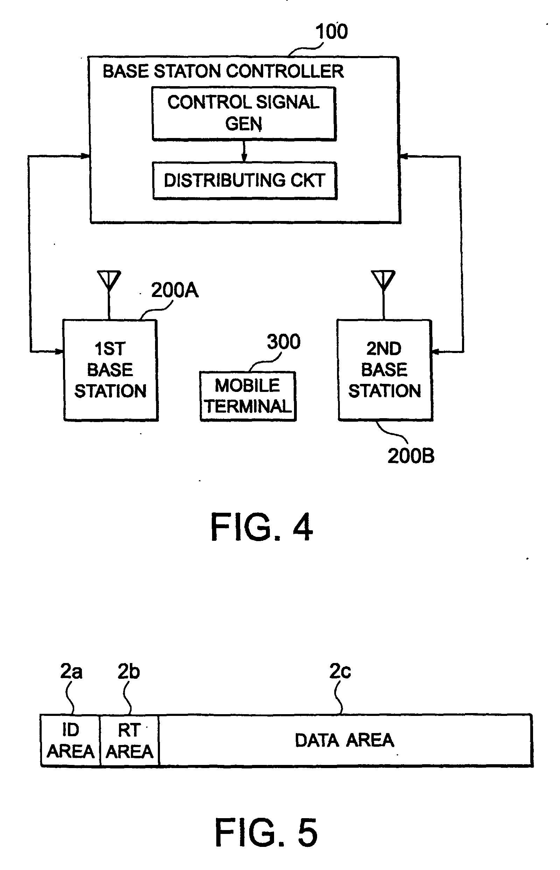

Referring to Fig. 4, a cellular CDMA system according to an embodiment of this invention has a base station controller 100, a plurality of base stations, namely, base station radio communication devices specified by first and second base stations 200A and 200B in Fig. 4, and a plurality of mobile terminals one of which is only depicted by 300 in Fig. 4 for simplification. The base station controller 100 is operable as an upper station of the first and the second base stations 200A and 200B to control both of them in a manner to be described later. It may be understood that the illustrated base station controller 100 comprises a control signal generator for generating a control signal as mentioned later and a distributing the control signal to the first and/or the second base stations 200A and 200B.

The first and the second base stations 200A and 200B have radio service areas or zones. The mobile terminal 300 is communicable with the base station controller 100 through the first and the second base stations 200A and 200B within the radio service zones.

In the illustrated example, the base station controller 100 supplies the first and the second base stations 200A and 200B with a speech signal and a control signal each of which is produced in the form of a data signal with a signal format. In other words, the base station controller 100 has a transmitter for transmitting the data signal in addition to a processing circuit for processing each signal given to the base station controller 100.

Referring to Fig. 5, the signal format has an identification (ID) area 2a, a retransmission number (RT) area 2b, and a data area 2c. The ID area is for arranging an identification signal which serves to distinguish between the speech signal and the control signal while the RT area is for arranging the retransmission number of the data signal located in the ID area. In addition, the data area is for locating the data signal transmitted to the first and the second base stations 200A and 200B.

In order to detect the number of the retransmission times, the base station controller 100 also has a timer and a counter. In this event, the timer serves to measure a transmission or a retransmission time of each data signal for a predetermined duration while the counter counts the number of retransmission times, namely, a retransmission number when an indication is given from the timer on lapse of the predetermined duration. From this fact, it is readily understood that each data signal is retransmitted each time when the predetermined duration lapses and the number of the retransmission times is located or arranged in the RT area illustrated in Fig. 5. In the illustrated example, the retransmission number is counted only when the control signal is sent from the base station controller 100 to each of the base stations 200. In this connection, the retransmission number is arranged in the retransmission number (RT) area only when the control signal is located in the data area illustrated in Fig. 5.

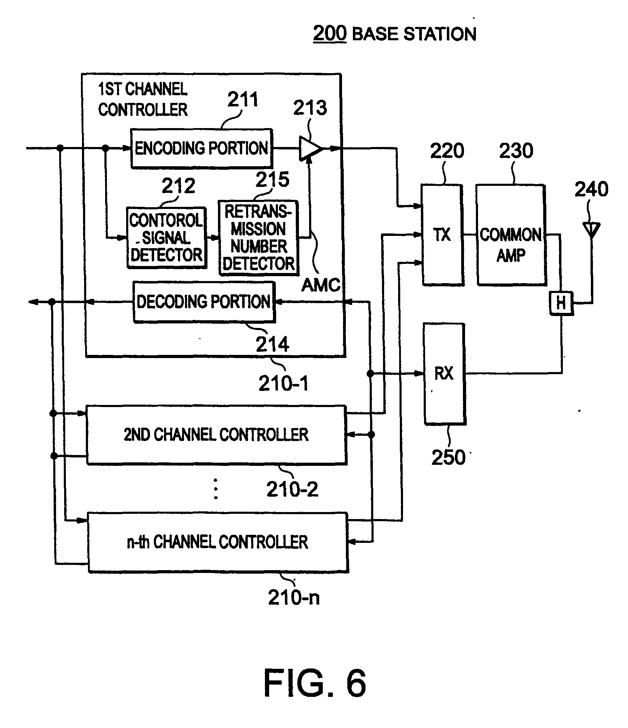

Referring to Fig. 6, description will be made about each of the first and the second base stations 200A and 200B that is used in the cellular CDMA system illustrated in Fig. 4 and that is indicated by 200 with the suffixes omitted. The illustrated base station 200 has first through n-th channel controllers 210-1 to 210-n, a transmitter (TX) 220, a common amplifier 230, an antenna 240, and a receiver (RX) 250. In the example being illustrated, n is an integer not smaller than three.

The receiver 250 receives a reception signal through the antenna 240 and a hybrid and demodulates the same into a demodulated signal which is decoded into a decoded signal by each of the channel controllers 210-1 to 210-n to be sent to the base station controller 100.

On the other hand, the transmitter 220 is connected to the first through the n-th channel controllers 210-1 to 210-n and is given coded signals obtained by encoding, in the channel controllers 210-1 to 210-n, a received signal sent from the base station controller 100. The coded signals are summed up and modulated by the transmitter 220 to be produced as a modulated signal. The modulated signal is amplified by the common amplifier 230 to be transmitted as a radio output signal from the antenna 240.

Inasmuch as a plurality of the mobile terminals are coupled to a single base station in the cellular CDMA system, the base station 200 has the plurality of the channel controllers 210-1 to 210-n, as shown in Fig. 6. However, since each of the first through the n-th channel controllers 210-1 to 210-n is similar in structure and operation to one another, description will be made only about the first channel controller 210-1 alone.

In Fig. 6, the first channel controller 210-1 has an encoding portion 211, a control signal detector 212, an amplitude control portion 213, and a retransmission number detector 215. The encoding portion 211 encodes the data signal sent from the base station controller 100 into an encoded signal while the amplitude control portion 213 controls an amplitude of the encoded signal. Consequently, the amplitude control portion 213 serves to control transmission power sent from the base station 200 to the mobile station 300.

In addition, the control signal detector 212 is operable to detect whether the data signal from the base station controller 100 detects or identifies the speech signal or the control signal. When the control signal is detected by the control signal detector 212, the retransmission number detector 215 counts the retransmission number of the control signal to produce an amplitude control signal AMC determined for the retransmission number in a manner to be described later. As a result, the amplitude of the encoded signal produced by the amplitude control portion 213 is varied in accordance with the amplitude control signal AMC sent from the retransmission number detector 215. In the illustrated example, the amplitude control portion 213 is controlled so that the amplitude of the encoded signal becomes large with an increase of the retransmission number of the control signal. In other words, the retransmission number detector 215 has a function of designating an amplitude value to the amplitude control portion 213 by producing the amplitude control signal.

Herein, it is assumed that the speech signal is transmitted from the base station controller 100 to the illustrated base station 200. The speech signal is encoded by the encoding portion 211 into the encoded signal and is thereafter sent to the amplitude control portion 213. The amplitude control portion 213 controls the amplitude value of the encoded signal in response to the amplitude control signal AMC given from the retransmission number detector 215. As a result, the speech signal is produced from the amplitude control portion 213 as an amplitude controlled encoded signal. It is to be noted that the amplitude control portion 213 is set so that the speech signal has a predetermined amplitude. At any rate, the amplitude controlled encoded signal is sent from the amplitude control portion 213 to the transmitter 220 and is modulated by the transmitter 220 into a modulated signal.

The modulated signal is transmitted as a radio signal through the common amplifier 230 and the antenna 240 to the mobile terminal 300.

On the other hand, the control signal is assumed to be given from the base station controller 100 to the base station 200. In this case, the control signal is detected by the control signal detector 212 to be sent to the retransmission number detector 215. The retransmission number detector 215 detects the retransmission number, namely, retransmission times of the control signal.

Referring back to Fig. 5, the control signal is identified by the ID area 2a of the data signal sent from the base station controller 100. In this connection, a control signal identification code is arranged in the ID area 2a to identity the control signal when the control signal is located within the data area 2c.

Moreover, the retransmission number is arranged in the retransmission number (RT) area 2c on transmission of the control signal. If the RT area is arranged with zero as the retransmission number, the retransmission number detector 215 sets the amplitude control portion 213 into an amplitude which is equal to the predetermined amplitude given to the speech signal. On the other hand, when the retransmission number becomes equal to unity, the retransmission number detector 215 sets the amplitude control portion 213 into an amplitude greater than the predetermined amplitude. Likewise, the amplitude set in the amplitude control portion 213 is further augmented under control of the retransmission number detector 215 when the retransmission number becomes equal to two.

More specifically, the retransmission number detector 215 sets the amplitude control portion 213 into a square root of 2, namely, √2 (about 1.4) times the predetermined amplitude determined for the speech signal, when the retransmission number is equal to unity.

Thus, the transmission number detector 215 is operable to set the amplitude control portion 213 into the amplitude which is augmented with an increase of the retransmission number of the control signal. Simultaneously, the control signal is delivered to the encoding portion 211 to be encoded into an encoded control signal as the encoded signal and is sent to the amplitude control portion 213. Inasmuch as the amplitude control portion 213 is controlled by the retransmission number detector 215 in the above-mentioned manner, the encoded control signal is controlled in its amplitude by the amplitude control portion 213 so as to be augmented to the amplitude indicated by the amplitude control signal (AMC). The augmented control signal is sent from the amplitude control portion 213 to the transmitter 220 to be modulated and to be transmitted through the common amplifier 230 and the antenna 240.

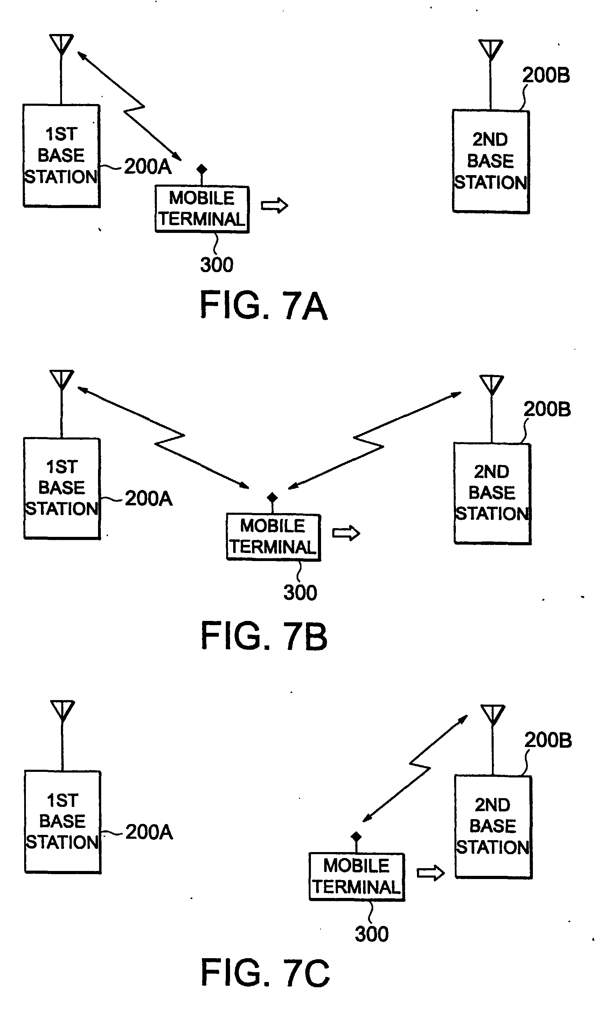

Referring to Figs. 6 through 10, description will be made about a soft handoff procedure according to this invention. As shown in Fig. 7A, the cellular CDMA system according to this invention has a base station controller 100 as illustrated in Fig. 4 and first and second base stations 200A and 200B each of which is similar in structure and operation to that illustrated in Fig. 6. Under the circumstances, it is assumed that the mobile station 300 communicates with the first base station 200A and is moved towards the second base station 200B, as shown in Fig. 7A.

In this event, the reception energy of the pilot channel from the first base station 200A is gradually reduced, as depicted by a curve 80A, as the mobile terminal 300 becomes remote from the first base station 200A. On the other hand, the reception energy of the pilot signal from the second base station 200B is gradually increased, as depicted by a curve 80B, as the mobile terminal 300 becomes close to the second base station 200B.

In a cellular CDMA system defined by TIA (Telecommunications Industry Association), EIA (Electronic Industries Association), or IS-95, first and second thresholds T-ADD and T-DROP are determined, as already mentioned in conjunction with Fig. 2. When the reception energy of the pilot channel from a certain base station exceeds the first threshold T-ADD, the certain base station is added as a soft handoff candidate station. This procedure may be referred to as addition to the soft handoff. Inversely, when the reception energy of the pilot channel from a base station under communication is lower than the second threshold T-DROP, the base station is removed from communicable base stations, which may be called deletion from soft handoff.

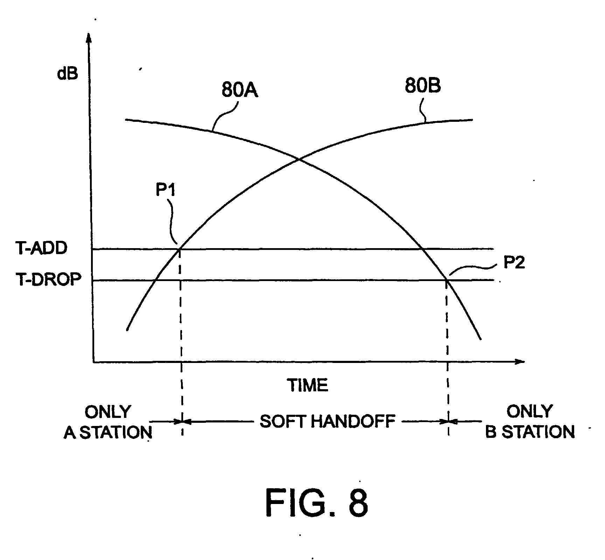

Turning to Fig. 8, let the mobile terminal 300 be moved towards the second base station 200B and be close to the second base station 200B, as illustrated in Fig. 7B. In this situation, the reception energy of the pilot channel from the second base station 200B exceeds the first threshold T-ADD at a point P1, as shown by the curve 80B while the reception energy of the pilot channel from the first base station 200A also exceeds the first threshold T-ADD, as shown by the curve 80A.

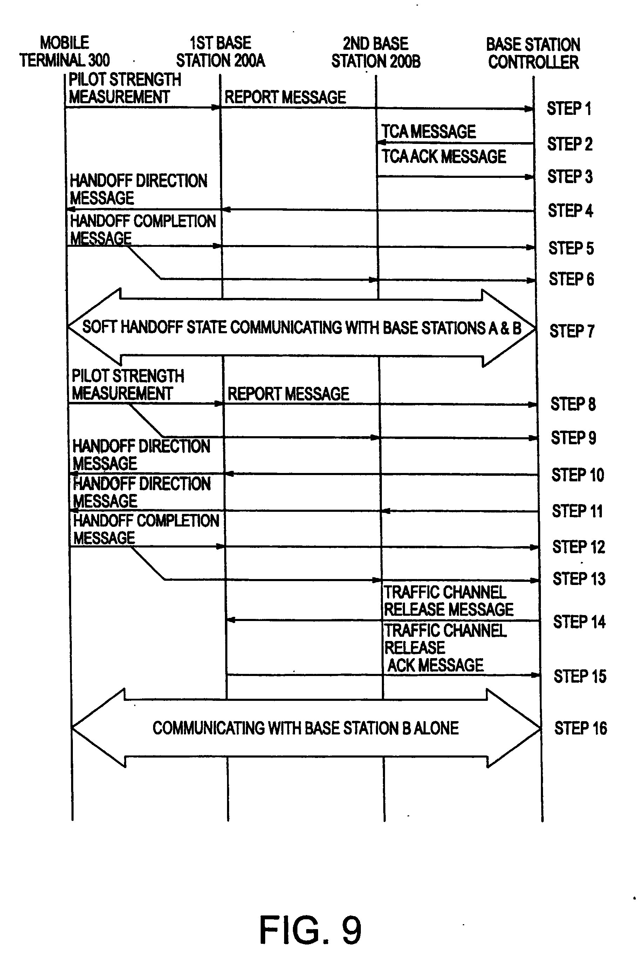

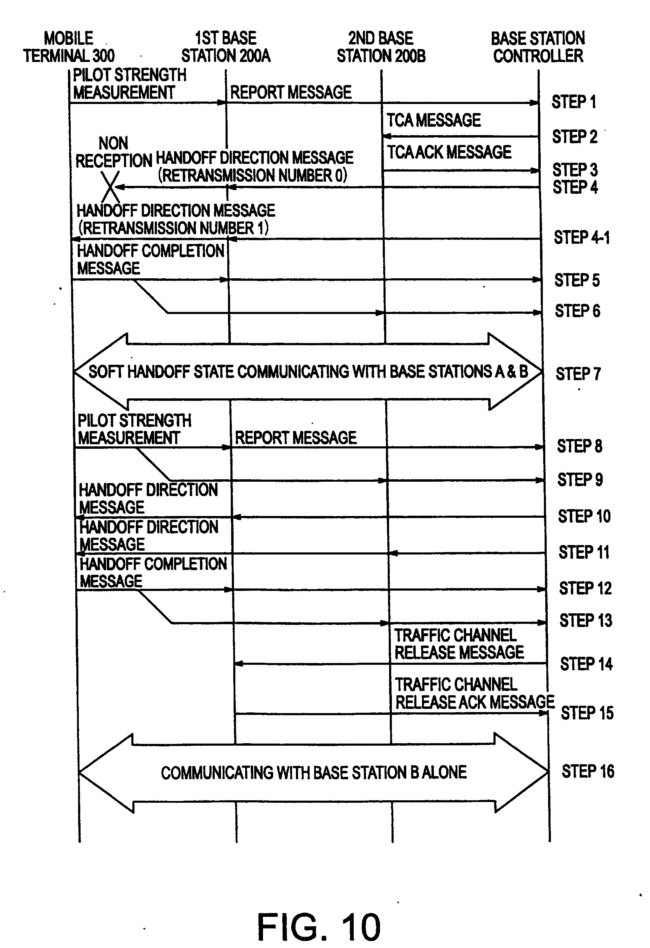

It is surmised that the mobile terminal 300 detects that the reception energy from the second base station 200B exceeds the first threshold T-ADD, as shown in Fig. 8. In this case, operation is executed in a manner illustrated in Fig. 9 when the handoff direction (HD) message is not retransmitted while operation is executed in a manner illustrated in Fig. 10 when the HD message is retransmitted from the first base station.

In Fig. 9, the pilot strength measurement report (PSMR) message is transmitted from the mobile terminal 300 to the first base station 200A and is thereafter transferred from the first base station 200A to the base station controller 100, as shown at a step 1 in Fig. 9. The PSMR message informs the base station controller of the second base station 200B from which the reception energy of the pilot signal exceeds the first threshold T-ADD. Supplied with the PSMR message from the mobile terminal 300, the base station controller adds the second base station 200B as a new soft handoff candidate station and sends the second base station 200B a traffic channel availability (abbreviated to TCA) message at a step 2 in Fig. 9. Such a TCR message serves to make the second base station 200B start a repeat operation of communication between the mobile terminal 300 and the base station controller. This shows that the second base station 200B is added in the base station controller as the new soft handoff candidate station.

Responsive to the TCA message from the base station controller, the second base station 200B returns a traffic channel availability (TCA) acknowledgement (ACK) message back to the base station controller, as shown at a step 3 in Fig. 9. Supplied with the TCA ACK message from the second base station 200B, the base station controller transmits a handoff direction (HD) message to the first base station 200A and, thereafter, the HD message is transferred one time from the first base station 200A to the mobile terminal 300, as shown at a step 4 in Fig. 9. As mentioned before, the HD message includes parameters, such as spread codes, which need to communicate with the second base station 200B.

The HD message is given to the control signal detector 212 of the first base station 200A illustrated in Fig. 6. In the first base station 200A, the control signal detector 212 judges the HD message signal as the control signal by monitoring the ID area of the HD message. Subsequently, the retransmission number of the HD message is detected by the retransmission number detector 215 (Fig. 6) of the first base station 200A. In this example, the HD message is received by the first base station 200A only one time and the retransmission number is set into zero. Therefore, the retransmission number detector 215 sets the amplitude control portion 213 to the same amplitude value as the speech signal. As a result, the HD message is transferred from the antenna 240 of the first base station 200A with the same energy as the speech signal.

Responsive to the HD message, the mobile terminal 300 sets the parameters indicated by the HD message and, thereafter, transmits a handoff completion message to the first base station 200A at a step 5. The handoff completion message is also transmitted from the mobile terminal 300 to the second base station 200B, as shown at a step 6 in Fig. 9. In any event, the handoff completion message is received by both or either one of the first and the second base stations 200A and 200B and is thereafter transferred to the base station controller, as shown at the steps 5 and 6. The base station controller selects either one of the handoff completion messages that is sent from the first and the second base stations 200A and 200B and that has a high probability.

Supplied with the handoff completion messages from the first and the second base stations 200A and 200B, the base station controller finishes the addition procedure for the soft handoff and put both the first and the second base stations 200A and 200B into soft handoff states, as shown in Fig. 8 and at a step 7 in Fig. 9. In other words, communication is executed through both the first and the second base stations 200A and 200B that are operable as repeater stations.

On the other hand, it is surmised that the mobile terminal 300 does not receives a first one of the HD message sent from the first base station 200A, as illustrated at a step 4 in Fig. 10. In this event, no handoff completion message is transmitted from the mobile terminal 300, as readily understood from Fig. 10.

Under the circumstances, the base station controller can not finish the addition procedure for the soft handoff on account of no reception of the handoff completion message. Accordingly, the base station controller transmits the same HD message again through the first base station 200A to the mobile terminal 300 at a step 4-1 in Fig. 10. Such a HD message produced again will be called a second HD message.

Given the second HD message from the base station controller, the control signal detector 212 of the first base station 200A judges the second HD message as the control signal. Subsequently, the retransmission number detector 215 is operated to detect the retransmission number of the HD message to be sent to the first base station 200A. In the illustrated example, the retransmission number detector 215 detects that the retransmission number becomes equal to unity, so as to set the amplitude control portion 213 into the amplitude value which is greater than that of the speech signal. The second HD message has the amplitude value which is about 1.4 times that of the speech signal and the energy equal to twice that of the speech signal. Thus, the second HD message is sent through the antenna 240 from the first base station 200A to the mobile terminal 300 again with twice the energy of the speech signal.

As illustrated in Fig. 7C, it is assumed that the mobile terminal 300 is further moved from the location shown in Fig. 7B and is very close to the second base station 200B. In consequence, let the reception energy of the pilot channel from the first base station 200A be lower than the second threshold T-DROP, as shown at a position P2 of the curve 80A illustrated in Fig. 8.

In this situation, the mobile terminal 300 transmits the PSMR message, as shown in Figs. 9 and 10. Inasmuch as the following procedure is common to both of Figs. 9 and 10, description will be made with reference to only Fig. 9 hereinafter.

The transmitted PSMR message can be received by the first base station 200A (step 8) and/or the second base station 200B (step 9). The base station controller selects either one of the PSMR messages that has a high probability.

At any rate, the PSMR message informs the base station controller of the base station, namely, the first base station 200A in which the reception energy of the pilot channel is lower than the second threshold T-DROP. The reported base station, namely, the first base station 200A is removed from the soft handoff candidate stations in the base station controller.

Supplied with the PSMR message, the base station controller prepares the HD message indicative of deletion of the first base station 200A from repeater stations and sends the same to the mobile terminal 300 through both the first base station 200A (step 10) and the second base station 200B (step 11).

Responsive to the HD message, the control signal detector 212 of the first base station 200A judges the HD message as the control signal. Thereafter, the retransmission number detector 215 of the first base station 200A detects the retransmission number of the HD message. In the example illustrated in Fig. 9, the retransmission number is set into zero in the retransmission number detector 215 because the HD message in question is transmitted as a first control signal from the base station controller after the soft handoff state. Therefore, the retransmission number detector 215 sets the amplitude control portion 213 into the amplitude value equal to that of the speech signal. The resultant HD message is transmitted from the first base station 200A through the antenna 240 with the same energy as that of the speech signal.

Herein, let the retransmission number of the HD message be equal to unity. In this case, the retransmission number detector 215 of the first base station 200A sets the amplitude control portion 213 into the amplitude value which is greater than that of the speech signal, like in the addition procedure for the soft handoff. Specifically, the amplitude value of the HD message may be a square root of two, namely, about 1.4 times the amplitude value of the speech signal and the resultant energy of the HD message becomes equal to twice the speech signal.

Responsive to the HD message for the deletion procedure, the mobile terminal 300 sets the parameters which need to delete the first base station 200A from the repeater stations. Thereafter, the mobile terminal 300 produces the handoff completion message.

The handoff completion message is sent from the mobile terminal 300 and is received by the first base station 200A (step 12) and/or the second base station 200B (step 13) to be sent to the base station controller. The base station controller selects either one of the handoff completion messages that has a high probability.

Supplied with the handoff completion message, the base station controller sends the first base station 200A the traffic channel release message (step 14) to stop the communication between the mobile terminal 300 and the first base station 200A.

Responsive to the traffic channel release message, the first base station 200A returns the traffic channel release acknowledgement (ACK) message back to the base station controller, as shown at a step 15 in Fig. 9. Thus, the deletion procedure from the soft handoff is finished and the mobile terminal 300 communicates only with the second base station 200B, as shown at a step 16 in Fig. 9. In other words, communication between the mobile terminal 300 and the base station controller is executed only through the second base station 200B, as illustrated in Fig. 7C.

Operation which is carried out after the step 5 of Fig. 10 is similar to that of Fig. 9 and will not be therefore described any longer.

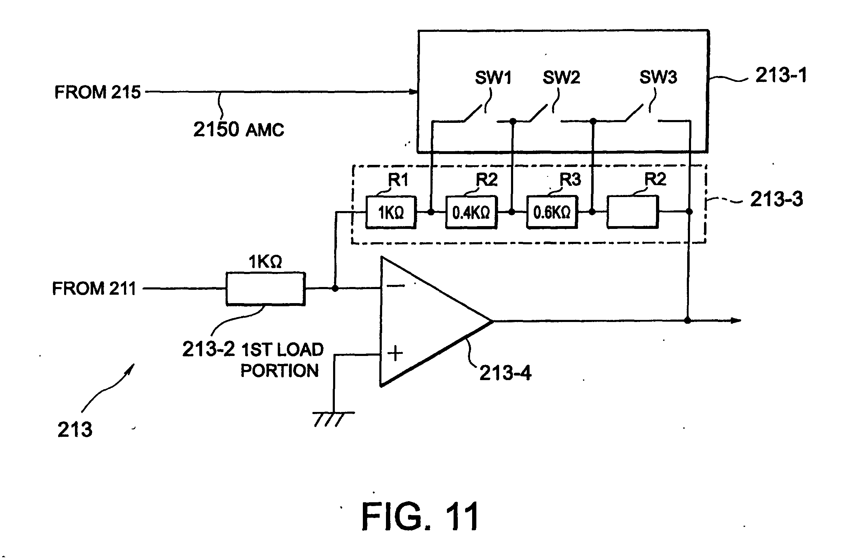

Referring to Fig. 11, description will be specifically made about the amplitude control portion 213 illustrated in Fig. 6. The amplitude control portion 213 illustrated in Fig. 11 is operable in response to the amplitude control signal sent from the retransmission number detector 215. As shown in Fig. 11, the amplitude control portion 213 has an amplitude setter 213-1, a first load portion 213-2, a second load portion 213-3, and an amplifier 213-4 which may be formed by an operational amplifier having an inverting input terminal (-), a non-inverting input terminal (+), and an output terminal. The illustrated amplitude setter 213-1 has first through third switches SW1 to SW3 which are selectively turned on or off in response to the amplitude control signal AMC.

The first load portion 213-2 is connected to the inverting input terminal of the amplifier 213-4 and to the second load portion 213-3 also, as shown in Fig. 11. The illustrated first load portion 213-2 is assumed to have a resistance value of 1 KΩ.

On the other hand, the second load portion 213-3 is formed by first through fourth resistors which are connected in series to one another. The first through the third resistors are assumed to have resistance values of 1 K Ω, 0.4 KΩ, and 0.6 KΩ, respectively.

As known in the art, the amplification factor of the illustrated amplifier 213-4 is determined by a resistance value ratio of the first load portion 213-2 to the second load portion 213-3.

Taking this into consideration, it is readily understood that, in order to obtain √2 times of the amplitude value, the first switch SW1 may be turned off while the second and the third switches SW2 and SW3 are turned on. This is because the resistance value of the second load portion 213-3 becomes equal to 1.4 KΩ and is 1.4 times the resistor value of the first load portion 213-2.

Likewise, in order to obtain two times the amplitude, the first and the second switches SW1 and SW2 may be put into off states while the third switch SW3 may be put into an on state. The resultant resistance value of the second load portion 213-3 becomes equal to 2.0 KΩ and, therefore, the amplification factor of the amplifier 213-4 becomes equal to two.

As mentioned before, the amplitude control portion 213 is structured by the second load portion 213-3 formed by the series circuit of the resistors, a switch circuit formed by the first through the third switches SW1 to SW3, and the amplifier 214-4 formed by an inverting amplifier, namely, the operational amplifier to which the second load portion 213-3 is connected as a feedback resistor. Specifically, the first through the third switches SW1 to SW3 are connected across the corresponding resistors in the manner illustrated in Fig. 11 so that each of the corresponding resistors is shortened. In any event, the first through the third switches SW1 to SW3 are selectively turned on or off in accordance with the retransmission number indicated by the amplitude control signal AMC given from the retransmission number detector 215 (Fig. 6).

Thus, the amplification factor of the amplifier 213-4 can be augmented with an increase of the retransmission number of the control signal.

Briefly speaking, each of the first and the second base stations 200A and 200B is featured in that the control signal sent from the base station controller is transmitted as the transmission signal to the mobile terminal in a manner augmented with an increase of the retransmission number. To this end, the method of transmitting the control signal from each base station includes the step of detecting the retransmission number of the control signal sent from the base station controller and the step of augmenting the amplitude of the transmission signal with the increase of the retransmission number. The retransmission number may be included in the control signal sent from the base station controller.

With this structure, the control signal is retransmitted from each base station to each base station with augmented or increased power when the control signal is not received by a mobile terminal once. Such retransmission of the control signal with the augmented or high power serves to avoid a call drop even when reception energy from another base station is abruptly increased. This means that the retransmission of the high power is helpful to prevent the call drop due to interference resulting from another base station. In consequence, it is possible to smoothly execute the soft handoff, even if the reception energy from another base station becomes suddenly large. This is because the reception energy from the base station under communication also becomes large at every retransmission of the control signal. At any rate, it is possible to reduce any interference which might occur in a downward link and, as a result, to waste superfluous electric power during the soft handoff and to also decrease failure of the soft handoff. Such a decrease of failure of the soft handoff might result in an increase of a subscriber capacity held in the CDMA system.

While this invention has thus far been described in conjunction with a preferred embodiment thereof, it will readily be possible for those skilled in the art to put this invention into practice in various other manners. For example, this invention is also applicable to a control signal which is sent from each mobile terminal to the base station controller. In this event, the control signal detector 212, the retransmission number detector 215, and the amplitude control portion 213 illustrated in Fig. 6 may be included in each mobile terminal. In addition, the speech signal may be augmented together with the control signal in accordance with the retransmission number of the control signal, although the control signal alone is augmented with an increase of the retransmission number in the above-mentioned embodiment. The retransmission number of the control signal may be counted within each base station or the mobile terminal without being counted in the base station controller. Furthermore, this invention may be applied to a cellular TDMA system without being restricted to the cellular CDMA system.

## Claims

1. A base station radio communication device for use in combination with a base station controller to receive a control signal from the base station controller and to transmit the control signal as a transmission signal to a mobile terminal, comprising:
receiving means for receiving the control signal; and
transmit power control means for controlling an amplitude of the transmission signal in accordance with a retransmission number that is representative of the number of retransmission times of the control signal.

2. A base station radio communication device as claimed in claim 1, wherein the transmit power control means comprises:
a detection circuit for detecting tat retransmission number of the control signal which is sent from the base station controller to produce a retransmission number signal representative of the retransmission number of the control signal; and
an amplitude control circuit for augmenting the amplitude of the transmission signal with an increase of the retransmission number of the control signal.

3. A base station radio communication device as claimed in claim 1, wherein the control signal includes information which is representative of the retransmission number of the control signal.

4. A base station radio communication device as claimed in claim 1, wherein the transmit power control means comprises:
a circuit for producing the transmission signal which has an amplitude augmented with an increase of the retransmission number of the control signal.

5. A method of controlling a base station radio communication device which transmits a transmission signal in response to a control signal sent from a base station controller, comprising the steps of:
detecting the retransmission number of the control signal sent from the base station controller; and
augmenting an amplitude of the transmission signal in accordance with the retransmission number that is representative of the number of retransmission times of the control signal.

6. A method as claimed in claim 5, wherein the control signal includes information representative of the retransmission number of the control signal.

7. A radio communication system comprising a plurality of base station radio communication devices and a base station controller which controls the base station radio communication devices, the base station controller comprising control signal supplying means for supplying a control signal to each of the base station radio communication devices, each of the base station radio communication devices being communicable with a mobile terminal within each radio service area determined for each base station radio communication device and comprising:
receiving means for receiving the control signal; and
transmit power control means for controlling an amplitude of the transmission signal in accordance with a retransmission number which is representative of the retransmission number of times of the control signal.

8. A radio communication system as claimed in claim 7, wherein the control signal supplying means comprises:
a generating circuit for repeatedly generating the control signal when no acknowledgment signal is received; and
a delivery circuit for repeatedly delivering the control signal to each base station radio communication device when no acknowledgment signal is received from the mobile terminal.

9. A radio communication system as claimed in claim 7, wherein the transmit power control means comprises:
a retransmission number detector for detecting the retransmission number of the control signal received through the receiving means to produce an amplitude control signal indicative of the amplitude of the control signal; and
an amplitude control portion for controlling the amplitude of the control signal that is varied in accordance with the amplitude control signal.

10. A radio communication system as claimed in claim 9, wherein the amplitude control portion comprises:
an operational amplifier having an inverting input terminal, a non-inverting terminal, and an output terminal;
a first load portion which is connected to the inverting terminal and which has a resistor;
a second load portion which is connected between the inverting terminal and the output terminal and which is formed by a a plurality of resistors connected in series to one another; and
a switch circuit which is operable in response to the amplitude control signal and which is connected across the resistors to selectively put the resistors into a shortened state to change resistance values of the second load portion from one to another.

11. A method of executing handoff in a radio communication system which comprises a mobile terminal and a plurality of base station radio communication devices, comprising the steps of:
transmitting, from either one of the base station radio communication stations and the mobile terminal to another one, a control signal determined for the handoff;
augmenting the same control signal to produce an augmented control signal when no acknowledgement of the control signal is received; and
retransmitting the augmented control signal again from one to another.

12. A method as claimed in claim 11, wherein the handoff is soft handoff.

13. A method as claimed in claim 11, wherein either one is one of the base station radio communication devices while another one is the mobile terminal.

14. A method as claimed in claim 13, wherein the transmitting step comprises the steps of:
receiving the control signal from a base station controller; and
sending the control signal from each of the base stations to the mobile station;
the augmenting step comprising the steps of:
monitoring no reception of the acknowledgement;
detecting a retransmission number of the control signal; and
increasing an amplitude of the control signal to produce the augmented control signal.

15. A method as claimed in claim 14, further comprising the steps of monitoring, in the mobile terminal, reception energy of the control signal and the augmented control signal; and
switching the base stations in the mobile terminal from one to another by using the control signal and the augmented control signal.

16. A method as claimed in claim 11, wherein either one is the mobile terminal while another one is a selected one of the base station radio communication devices.
